# EUROPEAN PATENT APPLICATION

(11) **EP 3 767 114 A1**
(43) Date of publication of application: **20.01.2021**
(21) Application number: 20185826.3
(22) Date of filing: 14.07.2020
(51) Int. Cl.: F16B 25/00, F16B 25/10

(54) **WOOD SCREW**

(30) Priority: 16.07.2019 US 201916512602
(71) Applicant: Hsu, Kuo-Tai, Tainan City (TW); Hsu, Ming-Hao, Tainan City (TW)
(72) Inventor: Hsu, Kuo-Tai, Tainan City (TW); Hsu, Ming-Hao, Tainan City (TW)
(74) Representative: Lang, Christian

(57) **Abstract**

A wood screw is disclosed herein. It comprises a screw head (1) and a rod body (2) integrally extended from the screw head (1) and having a shank part (21) and a screwing part (22), wherein the screwing part (22) comprises a straight surface surrounded with a threaded section (221) and a cutting section (222) on which a cutting unit (2221) is formed, and wherein a root diameter (a) of the shank part is larger than root diameters of the threaded section (b) and the cutting section (c) respectively, and larger than or equal to a maximum outer diameter of the cutting section defined by the cutting unit (2221).

## Description

### BACKGROUND OF THE INVENTION

### 1. Field of the Invention

The present invention relates to a wood screw which possesses great load-bearing capacity for the timber construction.

### 2. Description of Related Art

Wood screws are widely used for screwing and bonding objects. In the current wooden construction method, the beam-column bonding method is most common. It is achieved by jointing the beam and the column to form a frame and further assembling the wall and the floor on the frame, so the bonding and joint construction method have fundamental impacts on the structural safety of the entire building. The beam-column bonding construction method associated with the wood screws can be roughly divided into the following two types.
1. Bonding by pure woods: using a large wood construction material as the horizontal column and beam to bear weight, and then using wood screws to directly lock the column and beam and join them together.
2. Bonding the column and beam with the aids of hardware components: additionally using hardware components to connect or embed wood beams and columns so as to support and convey load.

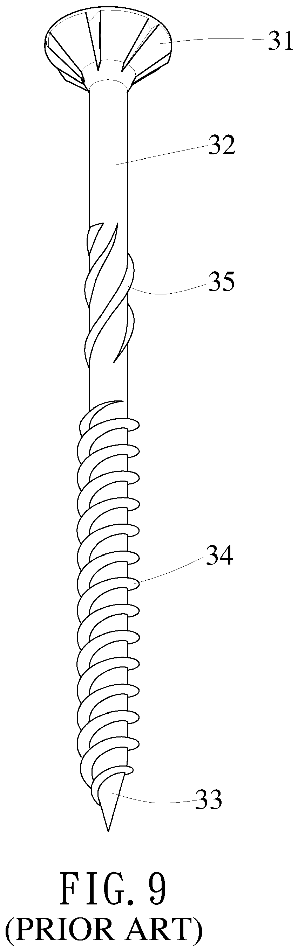

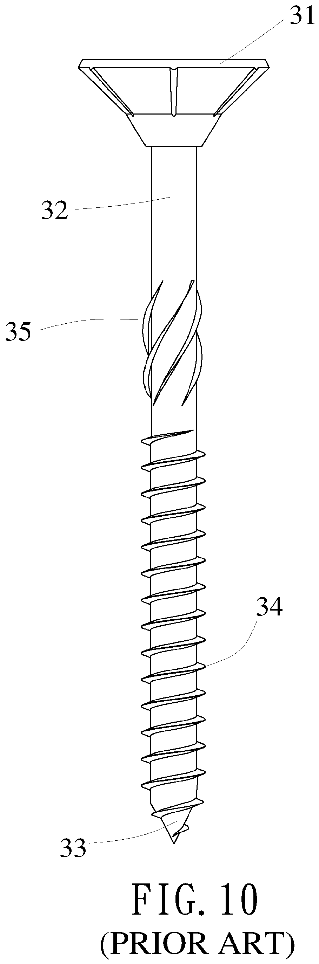

Referring to FIG. 9 and FIG. 10, a conventional wood screw comprises a screw head (31) and a rod body (32) having one end integrally extended from a bottom of the screw head (31). The screw head (31) provides a locking tool to manipulate a screw action of the wood screw. The other end of the screw head (31) is provided with a tapered part (33), and the rod body (32) is provided with a thread (34) spirally wound from the tapered part (33) toward the screw head (31). Furthermore, a reamer thread (35) is provided above the thread (34). In use of the conventional wood screw, the tapered part (33) drills a wooden work piece, and then the thread (34) screws to the object so as to achieve efficiency of firmly screwing and locking the wooden work piece.

However, the wood screws used in the construction industry bear acting force from a horizontal or vertical structural surface and axial tensile force from a girder supporting the load-bearing wall. As the connected object exerts a tensile force on the wood screw, the threadless rod body in the junction is subjected to the shear stress. Accordingly, in actual use, the wood screw of the prior art still has disadvantages of:
1. The wood screw is not easy to penetrate a pre-drilled steel plate when used with hardware components due to the large diameter of the reamer thread.
2. The reamer thread directly formed on a smooth surface of the rod body has a diameter larger than a diameter of the rod body, so a large gap is formed between the structural girder and the rod body after the wood screw is screwed into the structural girder.
3. The reamer thread occupies part of the length of the rod body, resulting in a reduction in the portion of the rod body that can withstand shear stress, and thus the wood screw is prone to break at the position adjacent to the reamer thread.

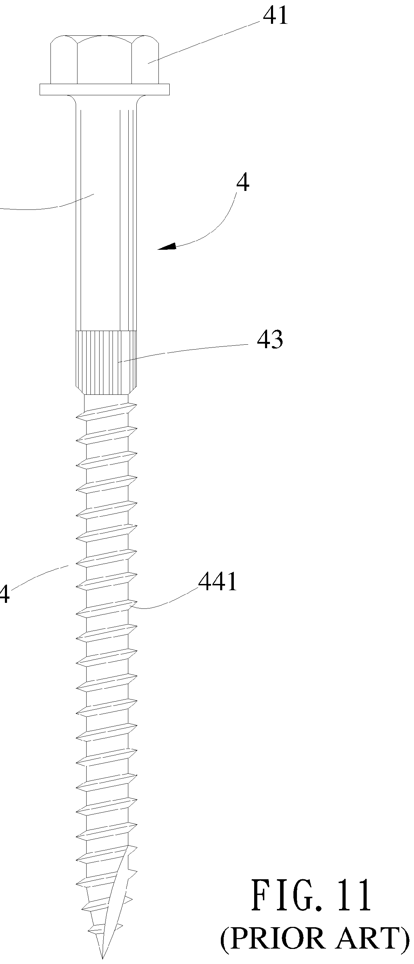

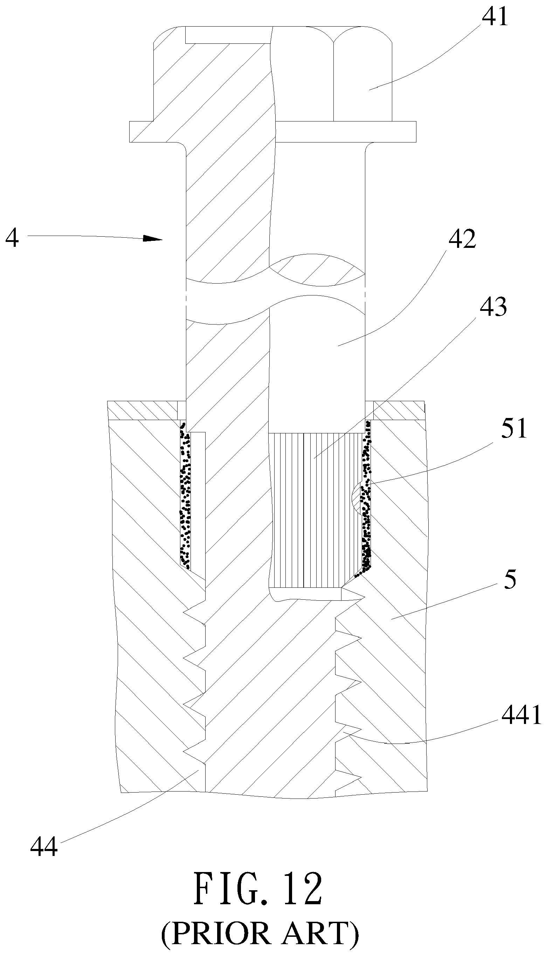

Additionally, referring to FIG. 11 and FIG. 12, another conventional wood screw (4) comprises a screw head (41), a threadless rod section (42), an embossing section (43) and a threaded section (44) connected to the embossing section (43) and having a tip and plural screw threads (441) on a surface thereof. An outer diameter of the embossing section (43) is equal to an outer diameter of the threadless rod section (42). When the conventional wood screw (4) is screwed into a wood material (5), the plural screw threads (441) on the threaded section (44) is cut and drilled into most of the wood fibers. Then, the embossing section (43) is drilled radially and outwards without cutting the wood fibers to form a reaming hole (51) for the threadless rod section (42) to be embedded, and the crushed wood chips are accommodated in the reaming hole (51) and in close contact with the threadless rod section (42). Accordingly, the abovementioned wood screw (4) has disadvantages of:
1. The embossing section belongs to the threadless rod section and is made by directly extruding from a bottom of the threadless rod section through a die. Therefore, the embossing section leads to a reduction in cross-sectional area, which reduces breaking torque that the threadless rod section can withstand.
2. The outer diameter of the embossing section is equal to the diameter of the threadless rod section. After the embossing section is drilled into the wood material radially and outwards to form the reaming hole, the crushed wood chips continue to accumulate in the reaming hole. As a result, the crushed wood chips closely surround the threadless rod section when the threadless rod section is screwed into the wood material, which exhibits greater driving resistance, as the contact surface between the threadless rod section and the reaming hole constitutes the interface friction of wood material and crushed wood chips.

### SUMMARY OF THE INVENTION

In view of the above-mentioned problems, the object of the present invention is to provide a wood screw which comprises a threadless rod body having an increased diameter for tightly screwing into woods or hardware materials so as to effectively improve overall fixing stability and bonding strength.

The wood screw comprises a screw head and a rod body. The screw head is disposed at a top of the rod body. The rod body has a shank part and a screwing part. The screwing part comprises a threaded section and a cutting section on which a cutting unit is formed and connected between the threaded section and the shank part. The shank part has a root diameter larger than or equal to a maximum outer diameter of the cutting section defined by the cutting unit. Compared with the conventional technique available now, the cutting unit allocated ahead of the shank part of the present invention in the screw-in direction can break off the fiber structure of the wood material proactively so it can reduce a lateral resistance generated by the shank part of a larger diameter screwing into an object.

Furthermore, the cutting unit of the present invention enables to screw and cut the object to form a smooth inner cutting hole for correspondingly and tightly contacting the shank part of a larger diameter. Accordingly, the present invention can reduce a gap between the wood screw and the object by the shank part tightly contacting the inner cutting hole and achieve the effects of withstanding high tensile force and shear stress.

### BRIEF DESCRIPTION OF THE DRAWINGS

FIG. 1 is a schematic diagram showing a wood screw without a screw thread;
FIG. 2 is a stereogram showing a first embodiment for a wood screw according to the present invention;
FIG. 3 is a lateral view showing the first embodiment for the wood screw according to the present invention;
FIG. 4 is a schematic diagram showing the first embodiment for the wood screw in use;
FIG. 5 is a partial enlarged sectional view showing the first embodiment for the wood screw according to the present invention;
FIG. 6 is a partial sectional view showing a cutting section of the first embodiment for the wood screw;
FIG. 7 is a stereogram showing a second embodiment for a wood screw according to the present invention;
FIG. 8 is a stereogram showing a third embodiment for a wood screw according to the present invention;
FIG. 9 is a schematic diagram showing a first prior art;
FIG. 10 is a lateral view showing a first prior art;
FIG. 11 is a lateral view showing a second prior art;
FIG. 12 is partial enlarged sectional view showing a second prior art.

### DETAILED DESCRIPTION OF THE PREFERRED EMBODIMENT

Hereinafter, an exemplary embodiment of the present invention will be described in detail with reference to the accompanying drawings.

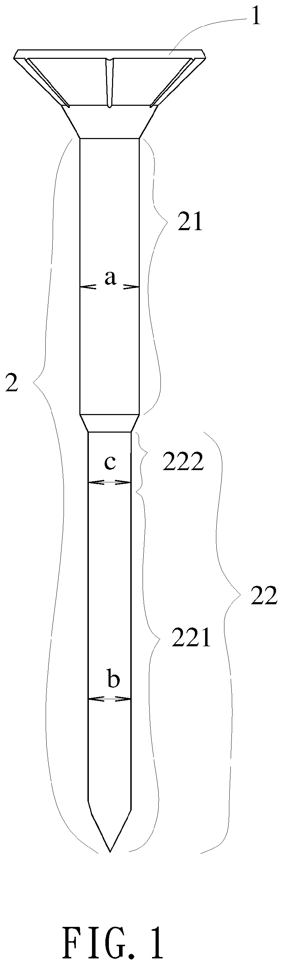

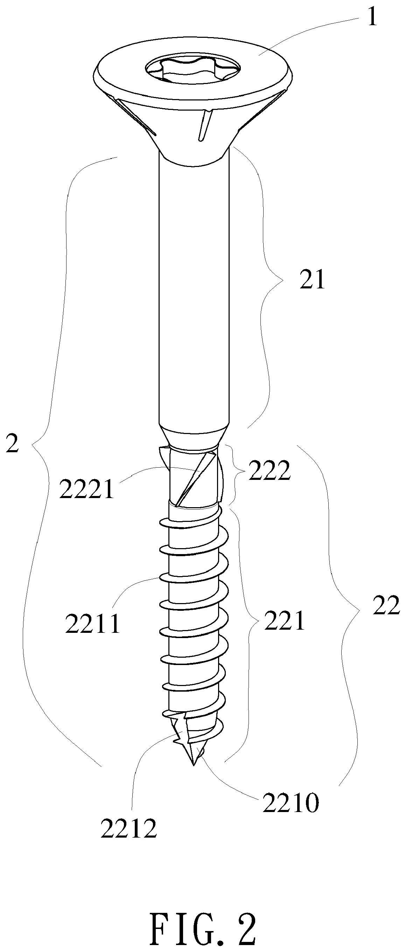

Referring to FIG. 1 to FIG. 3, a wood screw according to the present invention is disclosed herein. It mainly comprises a screw head (1) and a rod body (2) integrally extended from the screw head (1) in an axial direction. The rod body (2) comprises a shank part (21) of a first root diameter (a) and a screwing part (22) defined by a threaded section (221) of a second root diameter (b) and a cutting section (222) being connected between the shank part (21) and the threaded section (221) and being of a third root diameter (c). The second root diameter (b) of the threaded section (221) is less than the first root diameter (a) of the shank part (21), and the third root diameter (c) of the cutting section (222) is less than the first root diameter (a) of the shank part (21). The threaded section (221) has a tip portion (2210) at a bottom end thereof and a screw thread (2211) helically extended therearound from a juncture between the threaded section (221) and the cutting section (222) toward the tip portion (2210). The cutting section (222) has a cutting unit (2221) disposed thereon to define a maximum outer diameter (d) thereof being less than or equal to the first root diameter (a) of the shank part (21). The outer diameter (d) of the cutting unit (2221) can be gradually increased from the threaded section (221) toward the screw head (1). The screw head (1) and the cutting section (222) are connected by the shank part (21).

Additionally, it is worth mentioning that the cutting section (222) of the present invention is provided within a range of the screwing part (22), which significantly reduces the length of the threaded section (221). In other words, under the same length of the screwing part (22), the length of the threaded section (221) of the screwing part (22) of the present invention is effectively reduced due to the cutting section (222). Furthermore, a length ratio of the cutting section (222) to the threaded section (221) is 1:3 to 1:8. Reducing the length of the threaded section (221) has the following two advantages:
1. The reduction in the threading length of the threaded section (221) prevents generation of excessive friction during the screwing process, which also reduces the overall driving torque of the wood screw.
2. The reduction in the threading length of the threaded section (221) can effectively prevent the disadvantages of the conventional wood screw with dense screw threads, including preventing the wood object from cracking outwards due to excessive lateral force exerted from the thread surface when the wood screw is drilled into the wood object, and increasing the clamping force of the wood screw on the object to decrease the risk of loosening.

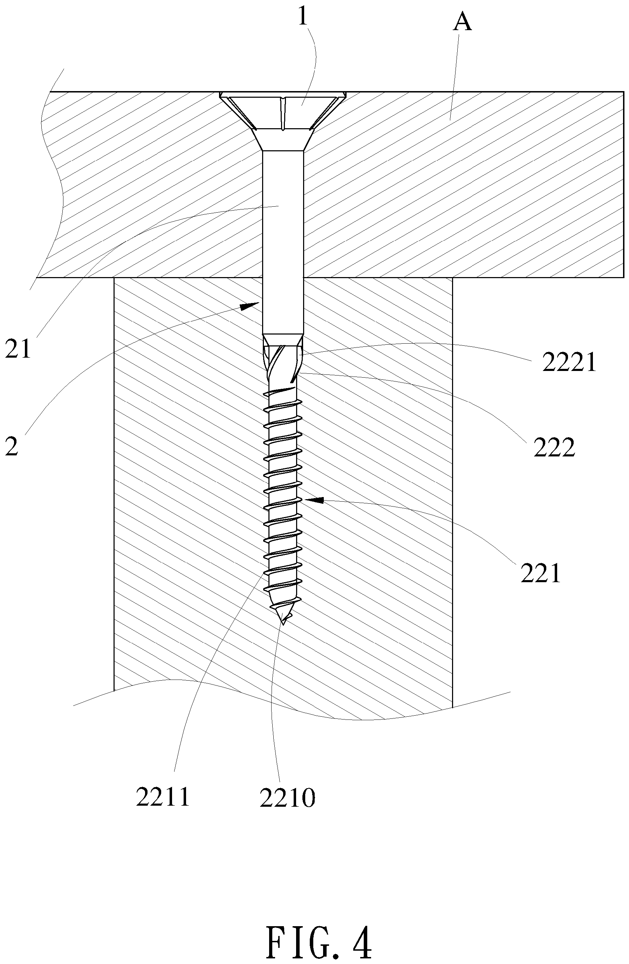

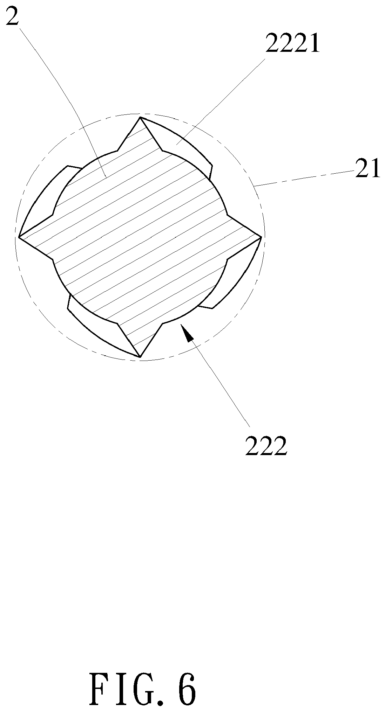

In actual implementation, the present invention provides various embodiments of the cutting unit (2221) of the cutting section (222) as shown in FIG. 1 to FIG. 7.

### Example 1

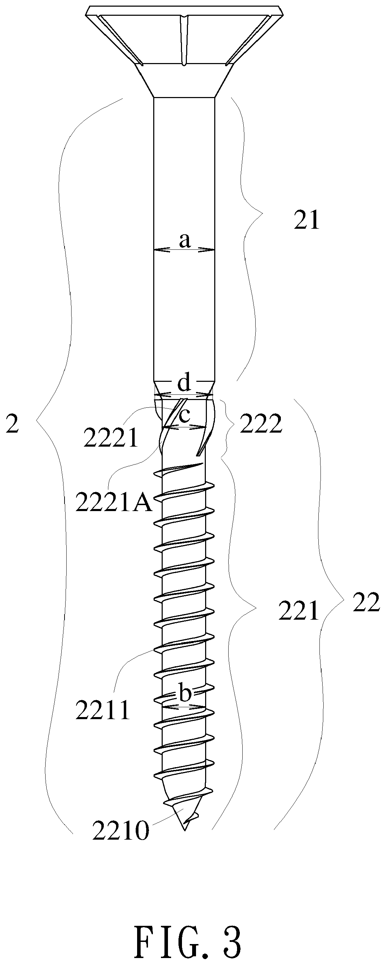

Referring to FIG. 3, a first embodiment for a wood screw according to the present invention is disclosed. The cutting unit (2221) comprises a plurality of screw threads (2221A) disposed helically around the cutting section (222) by thread rolling.

### Example 2

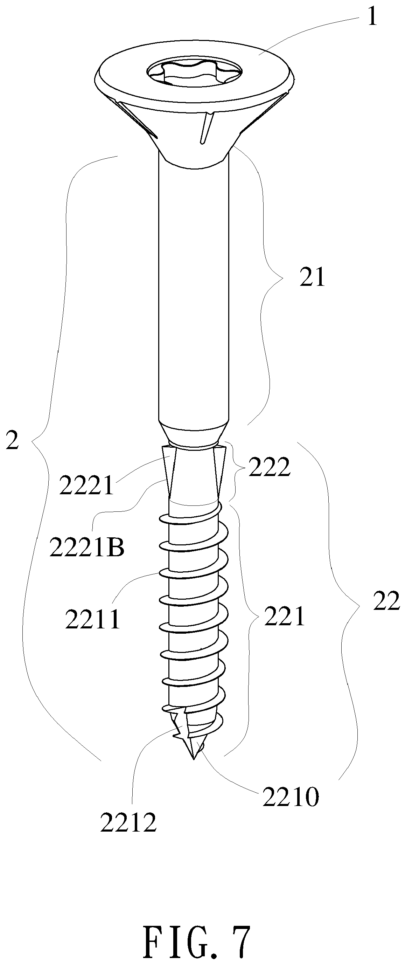

Referring to FIG. 7, a second embodiment for a wood screw according to the present invention is disclosed. The cutting unit (2221) comprises a plurality of cutting teeth (2221B) axially disposed on the cutting section (222) by clamping.

### Example 3

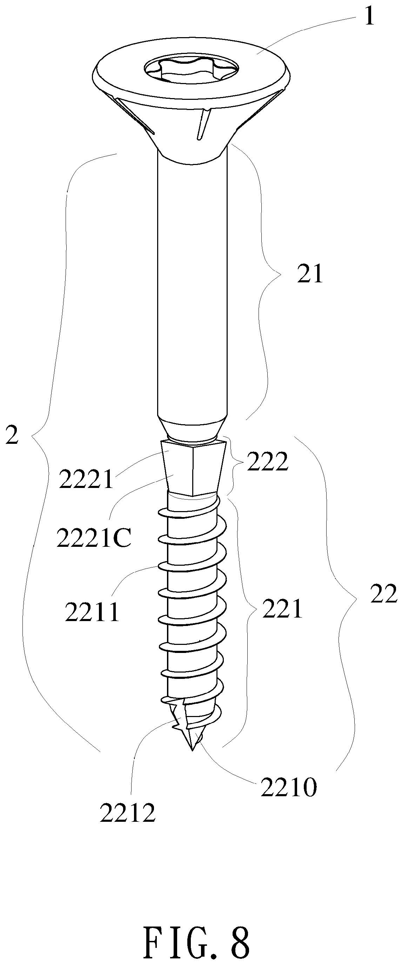

Referring to FIG. 8, a second embodiment for a wood screw according to the present invention is disclosed. The cutting unit (2221) comprises a plurality of cutting planes (2221C) integrally disposed on the cutting section (222) by forging.

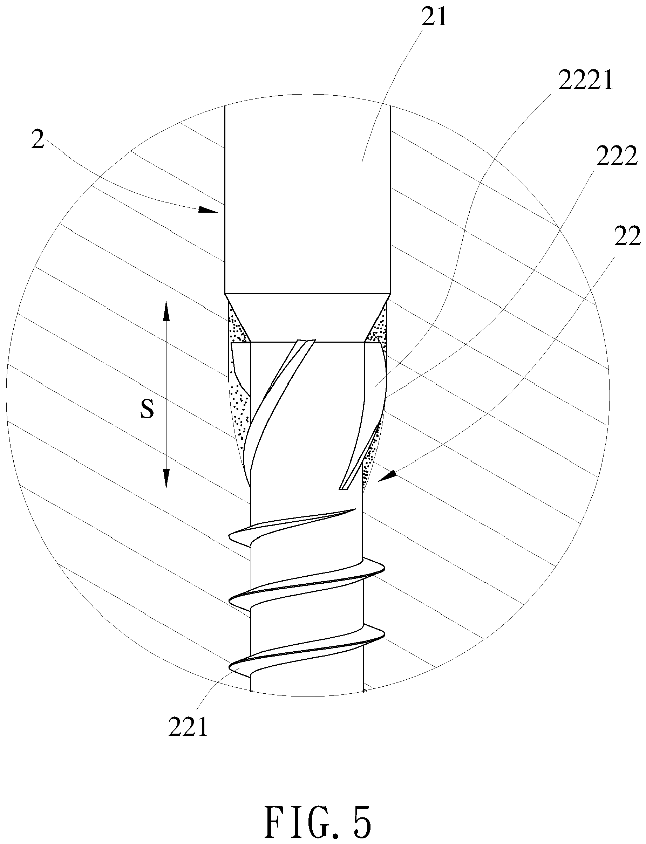

In a practical use as shown in FIG. 1 to FIG. 6, the tip portion (2210) of the threaded section (221) is further provided with a cutting slot (2212) to disconnect the screw thread (2211) around the tip portion (2210). The tip portion (2210) of the wood screw is pierced into an object (A) for positioning, and then the screw thread (2211) of the threaded section (221) is drilled into the object (A). In the steady positioning state, the cutting slot (2212) accelerates and assists the wood screw to cut and drill the object (A) and discharges wood shavings simultaneously. After the wood screw is gradually drilled into the object (A), the cutting unit (2221) on the cutting section (222) assists the cutting process. The cutting unit (2221) formed on the cutting section (222) has excellent cutting effect whether it is made by thread rolling, clamping or forging. When the wood screw is screwed into the object (A), the cutting section (222) previously cuts wood fibers of the object (A), so that a lateral resistance generated by the shank part (21) of a larger diameter screwing into the object (A) can be reduced. The design of the first root diameter (a) of the shank part (21) larger than or equal to the maximum outer diameter (d) of the cutting unit (2221) of the cutting section (222) enables the cutting unit (2221) to drill the object (A) to form a smooth inner cutting hole for correspondingly and tightly contacting the shank part (21). Furthermore, the crushed wood chips generated during the continuous screwing process can be stored in a transition zone (S) between the shank part (21) and the screwing part (22) as shown in FIG. 5 so as to avoid the crushed wood chips moving up around the shank part (21). Accordingly, the present invention can reduce a gap between the wood screw and the object (A) by the shank part (21) tightly contacting the inner cutting hole. When the shank part (21) enters in the object (A), the inner cutting hole still preserves low friction coefficient between different materials (e.g. metal and wood), so the wood screw of the present invention achieves the effect of withstanding high axial tensile force and high shear stress.

Compared with the conventional technique available now, the present invention has the following advantages:
1. The allocation of the cutting unit of the cutting section ahead of the shank part in the screw-in direction can reduce the lateral resistance of the rod body generated by the shank part of a larger diameter screwing into an object.
2. The design of the maximum outer diameter of the cutting unit of the cutting section not larger than the first root diameter of the shank part enables the cutting unit to drill the object to form a smooth inner cutting hole for correspondingly and tightly contacting the shank part. Accordingly, the present invention can reduce a gap between the wood screw and the object so as to achieve the effects of withstanding high tensile force and shear stress.
3. The present invention previously cuts wood fibers of the object by the cutting section and stores the crushed wood chips generated during the screwing process in the transition zone between the shank part and the screwing part to avoid the crushed wood chips moving up around the shank part and thereby preserves low friction coefficient between different materials when the shank part enters in the inner cutting hole.
4. The present invention reduces the length of the threaded section by setting the cutting section on the screwing part, which can effectively prevent excessive friction resistance of the conventional wood screw due to dense screw threads.
5. The present invention reduces the length of the threaded section by setting the cutting section on the screwing part, which can effectively prevent the wood object from cracking outwards due to excessive lateral force exerted from the thread surface of the dense screw threads when the wood screw is drilled into the wood object.

## Claims

1. A wood screw, comprising:
a screw head; and
a rod body integrally extended from the screw head in an axial direction and having a shank part of a first root diameter and a screwing part defined by a threaded section of a second root diameter less than the first root diameter of the shank part and a cutting section being connected between the shank part and threaded section and being of a third root diameter less than the first root diameter of the shank part, wherein the threaded section has a tip portion at a bottom end thereof and a screw thread helically extended therearound from a juncture between the threaded section and the cutting section toward the tip portion, wherein the cutting section further has a cutting unit disposed thereon to define a maximum outer diameter thereof being less than or equal to the first root diameter of the shank part.

2. The wood screw as claimed in claim 1, wherein the cutting unit comprises a plurality of screw threads disposed helically around the cutting section by thread rolling.

3. The wood screw as claimed in claim 1, wherein the cutting unit comprises a plurality of cutting teeth axially disposed on the cutting section by clamping.

4. The wood screw as claimed in claim 1, wherein the cutting unit comprises a plurality of cutting planes integrally disposed on the cutting section by forging.

5. The wood screw as claimed in claim 1, wherein the tip portion of the threaded section is provided with a cutting slot to disconnect the screw thread around the tip portion.

6. The wood screw as claimed in claim 1, wherein a length ratio of the cutting section to the threaded section is 1:3 to 1:8.

7. The wood screw as claimed in claim 5, wherein a length ratio of the cutting section to the threaded section is 1:3 to 1:8.
